# EUROPÄISCHE PATENTSCHRIFT

(11) **EP 3 974 755 B1**
(45) Veröffentlichungstag und Bekanntmachung des Hinweises auf die Patenterteilung: **15.05.2024**
(21) Anmeldenummer: 21196863.1
(22) Anmeldetag: 15.09.2021
(51) Int. Cl.: F28D 1/02, F28F 1/00, F28F 13/08

(54) **KÜHLERBAUGRUPPE FÜR EIN FAHRZEUG**
REFRIGERATOR MODULE FOR A VEHICLE
MODULE DE REFROIDISSEMENT POUR UN VÉHICULE

(30) Priorität: 25.09.2020 DE 102020212130
(43) Veröffentlichungstag der Anmeldung: 30.03.2022
(73) Patentinhaber: Brose Fahrzeugteile SE & Co. Kommanditgesellschaft, Coburg, 96450 Coburg (DE)
(72) Erfinder: SANDER, Jan, 96484 Meeder (DE)
(74) Vertreter: Maikowski & Ninnemann Patentanwälte Partnerschaft mbB

(56) Entgegenhaltungen:
- EP-A1- 1 391 550
- WO-A1-2005/028849
- CH-A- 516 130
- DE-A1-102010 046 471
- DE-A1-102012 202 883
- US-A1- 2005 067 152
- US-A1- 2007 227 707

## Beschreibung

Die vorgeschlagene Lösung betrifft eine Kühlerbaugruppe für ein Fahrzeug.

Eine Kühlerbaugruppe nach dem Oberbegriff des Anspruchs 1 ist aus DE 10 2012 202 883 A1 bekannt.

Kühlerbaugruppen für Fahrzeuge, insbesondere für Kraftfahrzeuge sind weithin bekannt. Teil einer derartigen Kühlerbaugruppe ist ein Kühler zur Kühlung eines Antriebsmotors des Fahrzeugs, der für diesen Zweck mindestens einen Kühlkörper mit mehreren Kühlmittelkanälen umfasst. Die Kühlmittelkanäle verlaufen beabstandet zueinander, typischerweise parallel. In den Kühlmittelkanälen fließt eine Kühlflüssigkeit, um Wärme aus dem Motorraum abzuführen. Zur Verbesserung der Wärmeabfuhr ist eine Mehrzahl von Rippen vorgesehen, die sich zwischen jeweils mindestens zwei Kühlmittelkanälen erstrecken und zwischen denen Spalte für eine Kühlluftströmung gebildet ist. Über die Rippen wird Wärme aus der Kühlflüssigkeit der Kühlmittelkanäle an die durchströmende Kühlluft abgegeben.

Es ist bei derartigen Kühlerbaugruppen ferner bekannt, ein mindestens ein Lüfterrad umfassendes Kühlerlüftermodul zur Beeinflussung des Kühlluftstromes in Richtung des Kühlkörpers vorzusehen. Über ein derartiges Kühlerlüftermodul kann zum Beispiel bei langsamer Fahrt oder Stillstand des Fahrzeugs ein (zusätzlicher) Kühlluftstrom durch Drehung des mindestens einen Lüfterrades erzeugt werden. Ferner sind Kühlerlüftermodule bekannt, die zusätzliche Kühlerklappen umfassen, die bedarfsweise verstellt und mithin geöffnet und geschlossen werden können, um den Kühlluftstrom auf Basis einer bei einer Fahrt des Fahrzeugs auf die Kühlerbaugruppe treffende Anströmung von Kühlluft zu steuern.

Die Kühlmittelkanäle des Kühlkörpers sind typischerweise als Rohre mit rechteckigem Querschnitt ausgeführt und über die Rippen paarweise miteinander verbunden. Durch ein vor dem Kühlkörper installiertes Kühlerlüftermodul wird wenigstens ein Teil des Kühlkörpers von dem Kühlerlüftermodul überdeckt und mithin für die Anströmung mit Kühlluft verblockt. Die Strömungsgeschwindigkeit einer Kühlluftströmung ist somit in den von dem Kühlerlüftermodul überdeckten Bereichen des Kühlkörpers geringer als in nicht von dem Kühlerlüftermodul überdeckten Bereichen des Kühlkörpers.

Ausgehend von dieser aus der Praxis bekannten Gestaltung von Kühlerbaugruppen liegt der vorgeschlagenen Lösung die Aufgabe zugrunde, eine verbesserte Kühlerbaugruppe bereitzustellen, mit der sich eine verbesserte Wärmeübertragung von einem in den Kühlmittelkanälen des Kühlkörpers geführten Kühlmittels an eine Kühlluftströmung durch die angrenzenden Rippen des Kühlkörpers bei einem stromauf vorhandenen Kühlerlüftermodul erreichen lässt.

Diese Aufgabe ist einer Kühlerbaugruppe des Anspruchs 1 gelöst.

Bei einer Kühlerbaugruppe gemäß der vorgeschlagenen Lösung ist an dem Kühlkörper des Kühlers die Mehrzahl der Rippen, die sich zwischen zwei Kühlmittelkanälen erstrecken, in mindestens zwei unterschiedliche Kühlzonen unterteilt. In jeder dieser Kühlzonen wird eine Kühlluftströmung durch Spalte zwischen zwei benachbarten Rippen und damit Rippenpaaren geführt, um von den Kühlmittelkanälen an die Mehrzahl der (Kühl-) Rippen abgegebene Wärme abzuführen. Eine erste Kühlzone ist dabei von dem Kühlerlüftermodul entlang einer Blickrichtung von dem Kühlerlüftermodul in Richtung des Kühlkörpers und damit in Strömungsrichtung eines Kühlluftstroms zumindest teilweise überdeckt. In dieser ersten Kühlzone ist eine Spaltbreite eines zwischen zwei (benachbarten) Rippen vorhandenen Spaltes größer als in einer zweiten Kühlzone des Kühlkörpers. Mit anderen Worten ist zwischen benachbarten Rippen einer ersten Kühlzone, die zumindest teilweise von einem stromauf angeordneten Kühlerlüftermodul überdeckt ist, ein größerer Abstand vorgesehen und mithin ein größerer Spalt als in wenigstens einer zweiten Kühlzone des Kühlkörpers, in dem keine Überdeckung durch das Kühlerlüftermodul vorhanden ist.

Mit der vorgeschlagenen Lösung wird somit bei der Gestaltung einer Rippenstruktur zwischen beabstandet zueinander verlaufenden Kühlmittelkanälen des Kühlkörpers unmittelbar dem Umstand Rechnung getragen, inwiefern vor (bezogen auf die Richtung einer Anströmung mit Kühlluft) dem Kühlkörper zumindest bereichsweise das Kühlerlüftermodul einen Strömungswiderstand bildet. So ist dann gerade zwischen Rippen einer ersten Kühlzone eine größere Menge an Kühlluftströmung zugelassen als zwischen benachbarten Rippen einer zweiten Kühlzone, an die Kühlluft ohne oder allenfalls geringe Beeinflussung durch das stromauf angeordnete Kühlerlüftermodul gelangt. Derart lässt sich eine Vergleichmäßigung einer Kühlluftströmung über den gesamten Kühlkörper erreichen, gleichwohl wenigstens einzelne Bereiche des Kühlkörpers bei einer Anströmung mit Kühlluft von einem Kühlerlüftermodul zumindest teilweise überdeckt sind und damit an diese Bereiche gegebenenfalls nur eine geringere Menge an Kühlluft gelangt (jedenfalls insbesondere wenn das mindestens eine Lüfterrad des Kühlerlüftermoduls nicht in Betrieb ist).

In der ersten zumindest teilweise von dem Kühlerlüftermodul überdeckten Kühlzone können Spalte zwischen jeweils zwei benachbarten Rippen der Mehrzahl von Rippen grundsätzlich unterschiedliche Spaltbreiten oder identische Spaltbreiten aufweisen. Während also beispielsweise im zuletzt genannten Fall Rippen der ersten Kühlzone an dem Kühlkörper zueinander äquidistant beabstandet sind, kann eine Ausführungsvariante auch vorsehen, dass unterschiedlich breite Spalte in der ersten Kühlzone vorhanden sind. Die unterschiedlichen oder identische Spaltbreiten können hierbei jeweils größer sein als Spaltbreiten zwischen jeweils zwei benachbarten Rippen einer zweiten Kühlzone. Dies schließt insbesondere ein, dass alle (gegebenenfalls ebenfalls untereinander unterschiedliche oder identische) Spaltbreiten in der zweite Kühlzone, die in der Blickrichtung nicht von dem Kühlerlüftermodul überdeckt ist, kleiner sind als eine kleinste Spaltbreite in der ersten Kühlzone.

In einer Ausführungsvariante sind Spaltbreiten zwischen zwei benachbarten Rippen in der ersten Kühlzone jeweils mindestens um den Faktor 1,2 größer als eine größte Spaltbreite zweier benachbarter Rippen in der zweiten Kühlzone.

Beispielsweise sind die verschiedenen Spaltbreiten zwischen jeweils zwei benachbarten Rippen der mindestens zwei unterschiedlichen Kühlzonen (d.h. die Spaltbreiten jeweils zweier benachbarter Rippen der ersten Kühlzone und die Spaltbreiten jeweils zweier benachbarter Rippen der mindestens einen zweiten Kühlzone) derart aufeinander abgestimmt und vorgegeben, dass sich eine möglichst gleichmäßige Kühlluftströmung über den gesamten Kühlkörper ergibt. Insbesondere können hierbei die Spaltbreiten derart aufeinander abgestimmt und vorgegeben sein, dass für wenigstens einen definierten Betriebspunkt, der durch eine bestimmte Anströmung der Kühlerbaugruppe mit Kühlluft in Richtung des Kühlkörpers charakterisiert ist, eine Strömungsgeschwindigkeit einer Teilmenge an Kühlluft aus der Anströmung, die als Teil der Kühlluftströmung an und durch die Mehrzahl der Rippen in der ersten Kühlzone strömt, im Wesentlichen oder genau identisch ist zu einer Strömungsgeschwindigkeit einer Teilmenge an Kühlluft aus der Anströmung, die als weiterer Teil der Kühlluftströmung an und durch die Mehrzahl der Rippen in der zweiten Kühlzone strömt. Für wenigstens einen definierten Betriebspunkt, der durch eine bestimmte Anströmung der Kühlerbaugruppe mit Kühlluft in Richtung des Kühlkörpers durch das Kühlerlüftermodul hindurch und an dem Kühlerlüftermodul vorbei charakterisiert ist, werden folglich - bei einer gleichmäßigen Anströmung über eine vorgegebene Anströmfläche stromauf des Kühlerlüftermoduls - über die verschiedenen Abstände zwischen den Rippen und damit Spaltbreiten eine (mittlere) Strömungsgeschwindigkeit des in der ersten Kühlzone vorliegenden Teils der Kuhluftströmung und eine (mittlere) Strömungsgeschwindigkeit des Teils der Kühlluftströmung in der wenigstens einen zweiten Kühlzone aneinander angeglichen. Unter einer im Wesentlichen identischen Strömungsgeschwindigkeit, insbesondere im Wesentlichen identischen mittleren Strömungsgeschwindigkeit in ersten und zweiten Kühlzonen wird hierbei beispielsweise eine maximale prozentuale Abweichung von 10% in den Strömungsgeschwindigkeiten verstanden.

Ein möglicher Betriebspunkt, für den die Abstimmung vorgenommen wird, zeichnet sich beispielsweise durch ein ruhendes Lüfterrad des Kühlerlüftermoduls und eine gleichmäßige Anströmung der Kühlerbaugruppe mit Kühlluft mit einer vorgegebenen Strömungsgeschwindigkeit, d.h. mit (weitestgehend) konstanter Geschwindigkeitsverteilung aus. Hieran orientiert sich dann eine Auslegung und damit Vorgabe der Abstände zwischen den Rippen und mithin Spaltbreiten. Derart lässt sich noch besser vermeiden, dass in der teilweise durch das Kühlerlüftermodul überdeckten und damit strömungstechnisch verblockten ersten Kühlzone lediglich eine Kühlluftströmung mit unerwünscht geringer Strömungsgeschwindigkeit entsteht. Zudem lässt sich eine gleichmäßige(re) Durchströmung des gesamten Kühlkörpers mit Kühlluft erreichen.

In einer Ausführungsvariante verlaufen die Rippen jeweils geradlinig (und damit z.B. nicht zickzackförmig) zwischen zwei Kühlmittelkanälen. Beispielsweise sind die Kühlmittelkanäle jeweils parallel zueinander verlaufend angeordnet und erstrecken sich damit entlang einer Längsrichtung. Die Rippen können dann senkrecht zu der Längsrichtung der Kühlmittelkanäle ausgebildet sein.

Alternativ oder ergänzend kann wenigstens eine Rippe der Mehrzahl der Rippen oder können alle Rippen jeweils zwei Kühlmittelkanäle miteinander verbinden. Hierüber lässt sich gegebenenfalls eine unmittelbare Wärmeabfuhr von den Kühlmittelkanälen verbessern. Es ist jedoch auch denkbar, dass sich von einem Kühlmittelkanal lediglich Rippen in Richtung eines anderen Kühlmittelkanals erstrecken, ohne mit dem anderen Kühlmittelkanal verbunden zu sein.

In einer Ausführungsvariante ist das Kühlerlüftermodul derart, bezogen auf eine zu beeinflussende Kühlluftströmung, stromauf des Kühlkörpers angeordnet, dass die erste, von dem Kühlerlüftermodul zumindest teilweise überdeckte Kühlzone einen zentralen Bereich des Kühlkörpers einschließt und das Kühlerlüftermodul wenigstens zwei Ränder aufweist, an denen vorbei Kühlluft in Richtung wenigstens zweier zweiter Kühlzonen des Kühlkörpers strömt. Die Ränder, an denen somit eine Anströmung mit Kühlluft vorbeiströmen kann, definieren hierbei eine Außenkontur des Kühlerlüftermoduls, sodass an den Rändern vorbeiströmende Kühlluft an dem Kühlerlüftermodul selbst vorbei in Richtung einer zweiten Kühlzone des Kühlkörpers strömt respektive geleitet wird. Eine solche zweite Kühlzone schließt dann beispielsweise jeweils einen Randbereich des Kühlkörpers abseits des zentralen Bereichs ein. In einer solchen Ausführungsvariante ist folglich das Kühlerlüftermodul, zentral angeordnet und überdeckt den dahinter, stromab liegenden Kühlkörper nicht vollkommen, sodass abseits (z.B. rechts und links) des zentralen Bereichs wenigstens zwei nicht überdeckte Kühlzonen des Kühlkörpers vorhanden sind, in denen die Rippen einen geringeren Abstand zueinander aufweisen.

Zu Erhöhung einer Oberfläche zwischen den Kühlmittelkanälen des Kühlkörpers sieht eine Ausführungsvariante vor, dass wenigstens ein Kühlmittelkanal eine blütenförmige Querschnittsfläche aufweist. Unter einer solchen blütenförmigen Querschnittsfläche wird insbesondere verstanden, dass im Querschnitt des jeweiligen Kühlmittelkanals ein zentraler (hohler und damit von Kühlmittel zu durchfließender) Abschnitt vorhanden ist, an dem bezogen auf einen in dem zentralen Abschnitt liegenden Mittel- oder Schwerpunkt mehrere (mindestens zwei) radial vorstehende Abschnitte vorgesehen sind. Diese radial vorstehenden Abschnitte können beispielsweise kreissegmentförmig oder fingerförmig sein. Die blütenförmige Querschnittsfläche kann somit insbesondere nach Art von Blütenblättern radial vorstehende Radialarme ausbilden, die im Betrieb des Kühlers von Kühlmittel, zum Beispiel Kühlflüssigkeit, durchflossen sind.

Alternativ oder ergänzend kann wenigstens ein Kühlmittelkanal des Kühlers eine sich tropfenförmig zu einem Endleistenabschnitt verjüngende Querschnittsfläche aufweisen. In einer solchen Variante weist folglich wenigstens ein Kühlmittelkanal einen Querschnitt mit einem, bezogen auf die Strömungsrichtung der Kühlluftströmung, stromauf liegenden Nasenleistenabschnitt und einen stromab liegenden, sich verjüngenden Endleistenabschnitt auf. Beispielsweise kann zur Strömungsoptimierung der Nasenleistenabschnitt konvex gewölbt sein, während der Endleistenabschnitt spitz zulaufend ausgeführt ist. Eine tropfenförmige Querschnittsfläche des wenigstens einen Kühlmittelkanals kann hierbei grundsätzlich auf die Erzielung eines möglichst geringen Strömungswiderstands und einer Vermeidung von Verwirbelungen stromab des Kühlmittelkanals abzielen.

Mit Blick auf etwaige komplexe Querschnittsformen wenigstens eines Kühlmittelkanals des Kühlkörpers und/oder eine besonderen Geometrie der Rippen sieht eine Ausführungsvariante vor, wenigstens einen Kühlmittelkanal und/oder die Mehrzahl der Rippen additiv herzustellen. Wenigstens ein Kühlmittelkanal und/oder die Mehrzahl der Rippen ist hier folglich in einem additiven Fertigungsverfahren, beispielsweise durch selektives Laserschmelzen, hergestellt.

Mit der vorstehend erläuterten gegebenenfalls blütenförmigen Querschnittsfläche wenigstens eines Kühlmittelkanals gehen eine vergrößerte Oberfläche und damit ein verbesserter Wärmeübergang von dem Kühlmittelkanal zu einer Kühlluftströmung einher. Diese vorteilhafte Wirkung ist dabei zunächst vollkommen unabhängig von unterschiedlichen Spaltmaßen zwischen benachbarten Rippen in unterschiedlichen ersten und zweiten Kühlzonen des Kühlkörpers, gleichwohl eine derartige Variante hiermit ohne weiteres effektiv kombiniert werden kann.

Des Weiteren sieht die vorgeschlagene Lösung ein Fahrzeug, insbesondere ein Kraftfahrzeug, mit einer Kühlerbaugruppe gemäß einer der vorstehend oder nachfolgend diskutierten Ausführungsvarianten vor.

Die beigefügten Figuren veranschaulichen exemplarisch mögliche Ausführungsvarianten der vorgeschlagenen Lösung.

Hierbei zeigen:
- Figur 1: schematisch eine Kühlerbaugruppe gemäß der vorgeschlagenen Lösung mit einem Kühlkörper, der unterschiedlich zueinander beabstandete und Kühlmittelkanäle miteinander verbindende Rippen aufweist, sowie mit einem vor dem Kühlkörper angeordneten Kühlerlüftermodul;
- Figur 2A: eine Querschnittsansicht einer Ausführungsvariante eines Kühlmittelkanals der Kühlerbaugruppe der Figur 1;
- Figur 2B: eine Querschnittsansicht einer weiteren Ausführungsvariante eines Kühlmittelkanals der Kühlerbaugruppe der Figur 1;
- Figur 3: eine Ausführungsvariante eines Kühlerlüftermoduls für die Kühlerbaugruppe der Figur 1.

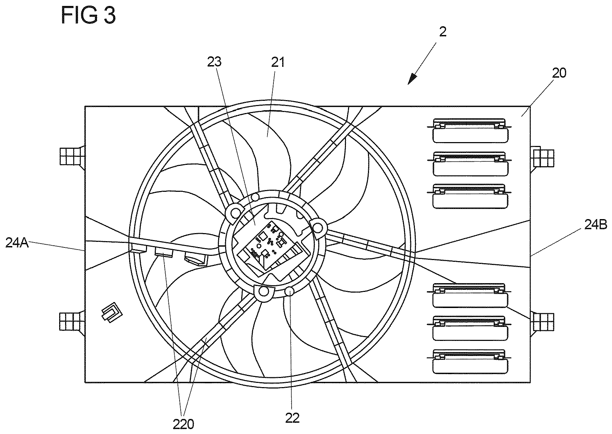

Die Figur 3 zeigt in Vorderansicht ein Kühlerlüftermodul 2 für eine Kühlerbaugruppe eines Kraftfahrzeugs. Das Kühlerlüftermodul 2 weist einen vorliegend rechteckförmigen Träger 20 auf, der unter anderem ein Lüfterrad 21 trägt. Das Lüfterrad 21 ist über einen zentral im Bereich der Drehachse des Lüfterrads 21 angeordneten Motor 23 elektromotorisch antreibbar. Der Motor 23 ist hierbei an einer Motorhalterung 22 des Trägers 20 festgelegt. Die Motorhalterung 22 ist über mehrere sich radial erstreckende Streben 220 mit einem umliegenden Trägerabschnitts des Trägers 20 verbunden, in dem eine Durchgangsöffnung für die Lagerung des Lüfterrads 21 ausgebildet ist. Die Außenkontur des Trägers 20 und damit des Kühlerlüftermoduls 2 wird unter anderem von zwei Rändern 24A und 24B definiert. Diese Ränder 24A und 24B sind bei der Darstellung der Figur 3 links und rechts vorgesehen.

Das Kühlerlüftermodul 2 der Figur 3 ist zur Anordnung vor einem Kühler eines Kraftfahrzeugs vorgesehen. Hierbei kann das Kühlerlüftermodul beispielsweise in zwei Funktionsmodi betrieben werden. In einem ersten Funktionsmodus können während einer Fahrt des Kraftfahrzeugs an dem Träger 20 vorgesehene Kühlerklappen geöffnet oder geschlossen werden, um eine Stärke eines Kühlluftstroms in Richtung des Kühlers zu regulieren. Bei langsamer Fahrt oder Stillstand des Kraftfahrzeugs wird in einem zweiten Funktionsmodus über das sich drehende Lüfterrad 21 ein (zusätzlicher) Kühlluftstrom in Richtung des Kühlers erzeugt.

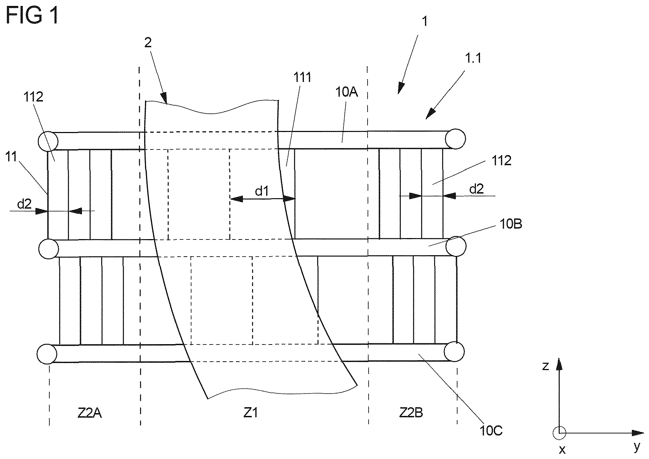

Wie anhand der schematischen Darstellung der Figur 1 für eine Kühlerbaugruppe mit einem Kühler 1 und dem Kühlerlüftermodul 2 veranschaulicht ist, überdeckt das Kühlerlüftermodul 2 im bestimmungsgemäß montierten Zustand wenigstens einen Teil des Kühlers 1 von vorne aus gesehen und damit entlang einer Blickrichtung von dem Kühlerlüftermodul 2 in Richtung des dahinter angeordneten Kühlers 1. Über das vor dem Kühler 1 angeordnete Kühlerlüftermodul 2 wird somit zumindest teilweise eine Anströmung des Kühlers 1 in einem überdeckten Bereich geblockt. Das Kühlerlüftermodul 2 bildet somit einen Strömungswiderstand für eine Anströmung des Kühlers 1 mit Kühlluft, insbesondere wenn das Lüfterrad 21 inaktiv ist.

Der Kühler 1 weist einen Kühlkörper 1.1 mit mehreren parallel zueinander verlaufenden Kühlmittelkanälen 10A, 10B und 10C auf. Die Kühlmittelkanäle 10A, 10B und 10C sind entlang einer Raumrichtung z zueinander beabstandet und verlaufen parallel zueinander entlang einer Längsrichtung y. Sich quer zur Längsrichtung y geradlinig erstreckend sind mehrere Rippen 11 vorgesehen, die die Kühlmittelkanäle 10A, 10B und 10C miteinander verbinden. In den Kühlmittelkanälen 10A, 10B und 10C wird eine Kühlflüssigkeit zur Abfuhr von Wärme aus dem Motorraum des Kraftfahrzeugs geführt. Über die Umströmung der Kühlmittelkanäle 10A, 10B und 10C mit Kühlluft sowie deren Verbindung über die Rippen 11, die ebenfalls mit Kühlluft umströmt werden, wird Wärme von der Kühlflüssigkeit und damit von den Kühlmittelkanälen 10A, 10B und 10C an Kühlluft übertragen.

Während die vorliegend zentral vorgesehene Kühlzone Z1 des Kühlkörpers 1.1 nur von Kühlluft durch das Kühlluftmodul 2 hindurch angeströmt werden kann, erreicht die randseitigen Kühlzonen Z2A und Z2B Kühlluft, die seitlich an dem Kühlerlüftermodul 2 und insbesondere an dessen Rändern 24A und 24B vorbei zu dem Kühlkörper 1.1 strömt. Um bei der dargestellten Ausführungsvariante eine gleichmäßige Kühlerluftströmung über den gesamten Kühlkörper 1.1 zu erreichen und insbesondere in einem Bereich des Kühlkörpers 1.1, der zumindest teilweise von vorne ausgesehen von dem Kühlerlüftermodul 2 überdeckt ist, eine größere Kühlluftmenge zur Verfügung zu stellen, sind an dem Kühlkörper 1.1 unterschiedliche Kühlzonen Z1 und Z2A, Z2B vorgesehen, in denen die Rippen 11 zueinander unterschiedliche Abstände aufweisen. So weisen die Rippen 11 in einer ersten Kühlzone Z1, die zumindest teilweise von dem Kühlerlüftermodul 2 überdeckt ist, größere Abstände zueinander auf. So ist hier zwischen benachbarten Rippen 11 jeweils ein vergleichsweise großer Spalt 111 mit einer Spaltbreite d1 vorgesehen, der - gegebenenfalls um ein Vielfaches und insbesondere um einen Faktor von wenigstens 1,2 - größer ist als eine Spaltbreite d2 eines Spaltes 112 zwischen zwei benachbarten Rippen 11 in einer von dem Kühlerlüftermodul 2 nicht überdeckten Kühlzone Z2A oder Z2B.

Über das Vorsehen kleinerer Rippenabstände respektive kleinerer Spaltbreiten d2 in den randseitigen Kühlzonen Z2A, Z2B und größeren Spaltbreiten d1 in der von dem Kühlerlüftermodul 2 zumindest teilweise überdeckten zentralen, ersten Kühlzone Z1 ist erreichbar, dass zwischen den Rippen 11 die Kühlluft mit vergleichbaren Strömungsgeschwindigkeiten strömt. Es wird mithin eine gleichmäßige(re) Kühlerluftströmung über den gesamten Kühlkörper 1.1 erreicht.

Hierbei sind, gegebenenfalls unter Nutzung einer Strömungssimulation, die verschiedenen Spaltbreite d1 und d2 zwischen benachbarten Rippen 11 der unterschiedlichen Kühlzonen Z1, Z2A und Z2B derart aufeinander abgestimmt und vorgegeben, dass für wenigstens einen definierten Betriebspunkt der Kühlerbaugruppe, der durch eine bestimmte Anströmung der Kühlerbaugruppe mit Kühlluft in Richtung des Kühlkörpers 1.1 durch das Kühlerlüftermodul 2 hindurch und an dem Kühlerlüftermodul 2 vorbei charakterisiert ist, eine mittlere Strömungsgeschwindigkeit einer Teilmenge an Kühlluft aus der Anströmung, die als Teil der Kühlerluftströmung an und durch die Mehrzahl der Rippen 11 in der der ersten Kühlzone Z1 strömt, im Wesentlichen (d.h. mit einer prozentualen Abweichung von maximal 10%) einer mittleren Strömungsgeschwindigkeit einer Teilmenge an Kühlluft aus der Anströmung entspricht, die als weiterer Teil der Kühlerluftströmung an und durch die Mehrzahl der Rippen 11 in den zweiten Kühlzonen Z2A und Z2B strömt. Beispielsweise kann dieser Betriebspunkt durch ein ruhendes Lüfterrad 21 und eine gleichmäßige Anströmung mit Kühlluft einer bestimmten Strömungsgeschwindigkeit und damit konstanter Geschwindigkeitsverteilung über den angeströmten Querschnitt der Kühlerbaugruppe charakterisiert sein. Für diesen Betriebspunkt oder gegebenenfalls mehrere Betriebspunkte werden dann die Abstände d1, d2 zwischen den Rippen 11 ermittelt, die zu einer möglichst optimalen Gleichverteilung der Strömungsgeschwindigkeiten über gesamten Kühlkörper 1.1 führen.

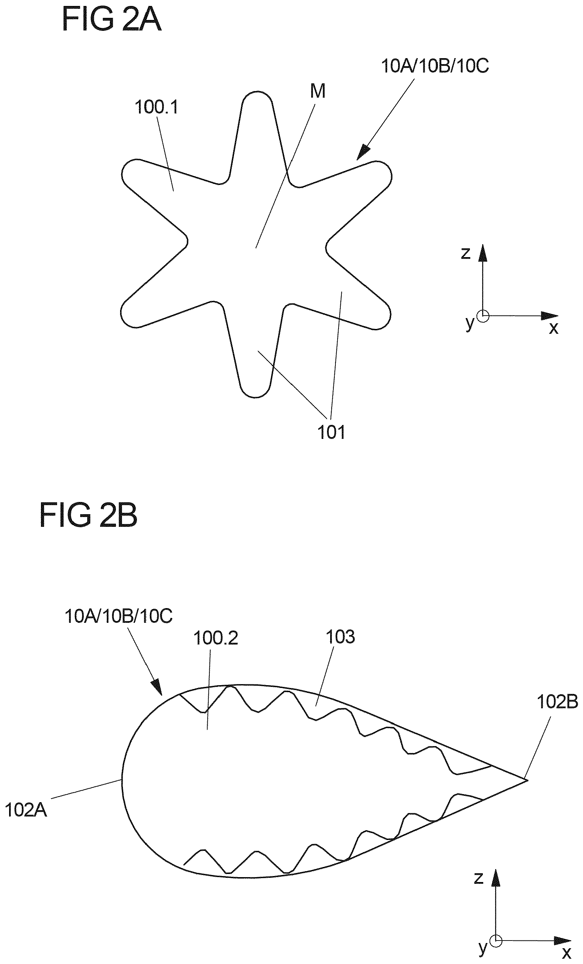

Für eine weitere Verbesserung der Wärmeübertragung und insbesondere eine Erhöhung der Oberfläche an den rohrförmig ausgestalteten Kühlmittelkanälen 10A, 10B und 10C kann entsprechend der Figur 2B beispielsweise vorgesehen sein, wenigstens einen Kühlmittelkanal oder alle Kühlmittelkanäle 10A, 10B und 10C mit einem blütenförmigen Querschnitt zu versehen. Ein Kühlmittelkanal 10A, 10B oder 10C weist dann eine blütenförmige Querschnittsfläche 100.1 auf. Bei dem Ausführungsbeispiel der Figur 2A erstrecken sich hierfür von einem zentralen Abschnitt mit einem Mittel- oder Schwerpunkt M der Querschnittsfläche 100.1 mehrere Radialarme 101 fingerförmig radial nach außen.

In einer Ausführungsvariante kann wenigstens einer der Kühlmittelkanäle 10A, 10B und 10C oder können alle Kühlmittelkanäle 10A, 10B und 10C des Kühlkörpers 1.1 mit einem strömungsoptimierten Querschnitt entsprechend der Figur 2B ausgebildet sein. Hierbei weist dann beispielsweise ein Kühlmittelkanal 10A, 10B oder 10C eine tropfenförmige Querschnittsfläche 100.2 auf. Diese tropfenförmige Querschnittsfläche 100.2 weist dann einen stromauf liegenden, konvex gewölbten Nasenleistenabschnitt 102A und einen sich stromab verjüngenden und gegebenenfalls spitz zulaufenden Endleistenabschnitt 102B auf.

Gegebenenfalls kann entsprechend der Figur 2B an einer Innenwandung eines Kühlmittelkanals 10A, 10B, 10C eine Mehrzahl von nach innen gerichteten Auswölbungen oder Ausbuchtungen 102 zur Oberflächenvergrößerung ausgebildet sein. Hierüber lässt sich ebenfalls eine Oberfläche für den Wärmeaustausch vergrößern.

Insbesondere die gegebenenfalls komplex ausgestalteten Querschnittsflächen 100.1 und 100.2 der Figuren 2A und 2B können im Wege additiver Fertigung hergestellt sein. Analog können auch die Rippen 11 mit unterschiedlichen Querschnittsformen und insbesondere additiv hergestellt sein.

In einer möglichen Weiterbildung kann die Mehrzahl der (Kühl-) Rippen 11 in einer Energie absorbierenden Gitterstruktur angeordnet sein. So lassen sich dann beispielsweise über die vorliegend geradlinig erstreckenden und parallel zueinander verlaufenden Rippen 11 gegebenenfalls kombiniert mit optimierten Rohrquerschnitten für die Kühlmittelkanäle 10A, 10B und 10C nicht nur ein im Vergleich zu in der Praxis üblichen Kühlerbaugruppen höhere Wirkungsgrade der Kühlerbaugruppe erzielen und sich Größe und Gewicht des Kühlers 1 reduzieren. Vielmehr ist dann auch über die Ausbildung einer Energie absorbierenden Gitterstruktur mithilfe der Rippen 11 eine verbesserte Absorption von crashbedingt auftretenden Kräften an der Kühlerbaugruppe möglich.

### Bezugszeichenliste

- 1: Kühler
- 1.1: Kühlkörper
- 100.1, 100.2: Querschnittsfläche
- 101: Radialarm
- 102A: Nasenleistenabschnitt
- 102B: Endleistenabschnitt
- 103: Ausbuchtung
- 10A, 10B, 10C: Kühlmittelkanal
- 11: Rippe
- 111, 112: Spalt
- 2: Kühlerlüftermodul
- 20: Träger
- 21: Lüfterrad
- 22: Motorhalterung
- 220: Strebe
- 23: Motor
- 24A, 24B: Rand
- M: Mittel-/Schwerpunkt
- Z1, Z2A, Z2B: Kühlzone

## Patentansprüche

1. Kühlerbaugruppe für ein Fahrzeug, mit
- einem Kühler (1), aufweisend mindestens einen Kühlkörper (1.1) mit mindestens zwei beabstandet zueinander verlaufenden Kühlmittelkanälen (10A, 10B, 10C) und einer Mehrzahl von Rippen (11), die sich zwischen den mindestens zwei Kühlmittelkanälen erstrecken, wobei zwischen jeweils zwei Rippen der Mehrzahl von Rippen (11) ein Spalt (111, 112) für eine Kühlluftströmung gebildet ist, und
- einem mindestens ein Lüfterrad (21) umfassenden Kühlerlüftermodul (2) zur Beeinflussung des Kühlluftstroms in Richtung des Kühlkörpers (1.1),
wobei an dem Kühlkörper (1.1) die Mehrzahl der Rippen (11), die sich zwischen zwei Kühlmittelkanälen (10A, 10B, 10C) erstrecken, in mindestens zwei unterschiedliche Kühlzonen (Z1, Z2A, Z2B) unterteilt sind, wobei das Kühlerlüftermodul (2) entlang einer Blickrichtung von dem Kühlerlüftermodul (2) in Richtung des Kühlkörpers (1.1) eine erste Kühlzone (Z1) der mindestens zwei unterschiedlichen Kühlzonen (Z1, Z2A, Z2B) wenigstens teilweise überdeckt und in wenigstens einer zweiten Kühlzone (Z2A, Z2B) keine Überdeckung durch das Kühlerlüftermodul (2) vorhanden ist, und
**dadurch gekennzeichnet, dass** in der ersten Kühlzone (Z1) eine Spaltbreite (d1) eines zwischen zwei Rippen (11) vorhandenen Spaltes (111) größer ist als in der zweiten Kühlzone (Z2A, Z2B) der mindestens zwei unterschiedlichen Kühlzonen (Z1, Z2A, Z2B).

2. Kühlerbaugruppe nach Anspruch 1, **dadurch gekennzeichnet, dass** in der ersten, zumindest teilweise von dem Kühlerlüftermodul (2) überdeckten Kühlzone Spalte (111) zwischen jeweils zwei benachbarten Rippen (11) der Mehrzahl von Rippen unterschiedliche Spaltbreiten oder identische Spaltbreiten (d1) aufweisen.

3. Kühlerbaugruppe nach Anspruch 2, **dadurch gekennzeichnet, dass** die unterschiedlichen oder identischen Spaltbreiten (d1) jeweils größer sind als die Spaltbreiten (d2) zwischen jeweils zwei benachbarten Rippen (11) der zweiten Kühlzone (Z2A, Z2B).

4. Kühlerbaugruppe nach einem der Ansprüche 1 bis 3, **dadurch gekennzeichnet, dass** Spaltbreiten (d1) zwischen zwei benachbarten Rippen (11) in der ersten Kühlzone (Z1) jeweils mindestens um den Faktor 1,2 größer sind als eine größte Spaltbreite (d2) zwei benachbarten Rippen (11) in der zweiten Kühlzone (Z2A, Z2B).

5. Kühlerbaugruppe nach einem der vorhergehenden Ansprüche, **dadurch gekennzeichnet, dass** die verschiedenen Spaltbreiten (d1, d2) zwischen jeweils zwei benachbarten Rippen (11) der mindestens zwei unterschiedlichen Kühlzonen (Z1, Z2A, Z2B) derart aufeinander abgestimmt und vorgegeben sind, dass für wenigstens einen definierten Betriebspunkt, der durch eine bestimmte Anströmung der Kühlerbaugruppe mit Kühlluft in Richtung des Kühlkörpers (1.1) charakterisiert ist, eine Strömungsgeschwindigkeit einer Teilmenge an Kühlluft aus der Anströmung, die als Teil der Kühlluftströmung an und durch die Mehrzahl der Rippen (11) in der ersten Kühlzone (Z1) strömt, im Wesentlichen oder genau identisch ist zu einer Strömungsgeschwindigkeit einer Teilmenge an Kühlluft aus der Anströmung, die als weiterer Teil der Kühlluftströmung an und durch die Mehrzahl der Rippen (11) in der zweiten Kühlzone (Z2A, Z2B) strömt.

6. Kühlerbaugruppe nach einem der vorhergehenden Ansprüche, **dadurch gekennzeichnet, dass** die Rippen (11) jeweils geradlinig verlaufend ausgebildet sind.

7. Kühlerbaugruppe nach einem der vorhergehenden Ansprüche, **dadurch gekennzeichnet, dass** eine Rippe (11) jeweils zwei Kühlmittelkanäle (10A, 10B; 10B, 10C) miteinander verbindet.

8. Kühlerbaugruppe nach einem der vorhergehenden Ansprüche, **dadurch gekennzeichnet, dass** das Kühlerlüftermodul (2) derart, bezogen auf eine zu beeinflussende Kühlluftströmung, stromauf des Kühlkörpers (1.1) angeordnet ist, dass die erste, von dem Kühlerlüftermodul (2) zumindest teilweise überdeckte Kühlzone (Z1) einen zentralen Bereich des Kühlkörpers (1.1) einschließt und das Kühlerlüftermodul (2) wenigstens zwei Ränder (24A, 24B) aufweist, an denen vorbei eine Anströmung mit Kühlluft in Richtung wenigstens zweier zweiter Kühlzonen (Z2A, Z2B) des Kühlkörpers (1.1) strömt.

9. Kühlerbaugruppe nach einem der vorhergehenden Ansprüche, **dadurch gekennzeichnet, dass** wenigstens ein Kühlmittelkanal (10A, 10B, 10C) eine blütenförmige Querschnittsfläche (100.1) aufweist.

10. Kühlerbaugruppe nach einem der vorhergehenden Ansprüche, **dadurch gekennzeichnet, dass** wenigstens ein Kühlmittelkanal (10A, 10B, 10C) eine sich tropfenförmig zu einem Endleistenabschnitt (102B) verjüngende Querschnittsfläche (100.2) aufweist.

11. Kühlerbaugruppe nach einem der vorhergehenden Ansprüche, **dadurch gekennzeichnet, dass** wenigstens ein Kühlmittelkanal (10A, 10B, 10C) und/oder die Mehrzahl der Rippen (11) additiv hergestellt sind.

12. Fahrzeug mit einer Kühlerbaugruppe nach einem der vorhergehenden Ansprüche.

## Claims

1. A radiator assembly for a vehicle, comprising
- a radiator (1), including at least one heat sink (1.1) with at least two coolant channels (10A, 10B, 10C) extending at a distance to each other and a plurality of ribs (11) which extend between the at least two coolant channels, wherein between two ribs each of the plurality of ribs (11) a gap (111, 112) is formed for a cooling air flow, and
- a radiator fan module (2) comprising at least one fan wheel for influencing the cooling air flow towards the heat sink (1.1),
wherein on the heat sink (1.1) the plurality of ribs (11), which extend between two coolant channels (10A, 10B, 10C), are divided into at least two different cooling zones (Z1, Z2A, Z2B), wherein the radiator fan module (2) as seen along a line of sight from the radiator fan module (2) towards the heat sink (1.1) at least partly covers a first cooling zone (Z1) of the at least two different cooling zones (Z1, Z2A, Z2B) and in at least one second cooling zone (Z2A, Z2B) there is no coverage by the radiator fan module (2), and
**characterized in that** in the first cooling zone (Z1) a gap width (d1) of a gap (111) present between two ribs (11) is greater than in the second cooling zone (Z2A, Z2B) of the at least two different cooling zones (Z1, Z2A, Z2B).

2. The radiator assembly according to claim 1, **characterized in that** in the first cooling zone at least partly covered by the radiator fan module (2) gaps (111) between two adjacent ribs (11) each of the plurality of ribs have different gap widths or identical gap widths (d1).

3. The radiator assembly according to claim 2, **characterized in that** the different or identical gap widths (d1) each are greater than the gap widths (d2) between two adjacent ribs (11) each of the second cooling zone (Z2A, Z2B).

4. The radiator assembly according to any of claims 1 to 3, **characterized in that** gap widths (d1) between two adjacent ribs (11) in the first cooling zone (Z1) each are greater by at least the factor of 1.2 than a largest gap width (d2) of two adjacent ribs (11) in the second cooling zone (Z2A, Z2B).

5. The radiator assembly according to any of the preceding claims, **characterized in that** the different gap widths (d1, d2) between two adjacent ribs (11) each of the at least two different cooling zones (Z1, Z2A, Z2B) are adjusted to each other and specified in such a way that for at least one defined operating point, which is **characterized by** a particular flow of cooling air towards the radiator assembly in the direction of the heat sink (1.1), a flow velocity of a partial quantity of cooling air from the approach flow, which as part of the cooling air flow flows towards and through the plurality of ribs (11) in the first cooling zone (Z1), is substantially or exactly identical to a flow velocity of a partial quantity of cooling air from the approach flow, which as a further part of the cooling air flow flows towards and through the plurality of ribs (11) in the second cooling zone (Z2A, Z2B).

6. The radiator assembly according to any of the preceding claims, **characterized in that** the ribs (11) each are configured to extend in a straight line.

7. The radiator assembly according to any of the preceding claims, **characterized in that** one rib (11) each connects two coolant channels (10A, 10B; 10B, 10C) to each other.

8. The radiator assembly according to any of the preceding claims, **characterized in that** the radiator fan module (2), based on a cooling air flow to be influenced, is arranged upstream of the heat sink (1.1) in such a way that the first cooling zone (Z1) at least partly covered by the radiator fan module (2) includes a central area of the heat sink (1.1) and the radiator fan module (2) has at least two edges (24A, 24B) past which an approach flow of cooling air flows in the direction of at least two second cooling zones (Z2A, Z2B) of the heat sink (1.1).

9. The radiator assembly according to any of the preceding claims, **characterized in that** at least one coolant channel (10A, 10B, 10C) has a blossom-shaped cross-sectional area (100.1).

10. The radiator assembly according to any of the preceding claims, **characterized in that** at least one coolant channel (10A, 10B, 10C) has a cross-sectional area (100.2) tapering towards an end strip portion (102B) in a drop-shaped manner.

11. The radiator assembly according to any of the preceding claims, **characterized in that** at least one coolant channel (10A, 10B, 10C) and/or the plurality of ribs (11) are additively manufactured.

12. A vehicle comprising a radiator assembly according to any of the preceding claims.

## Revendications

1. Ensemble de radiateur pour un véhicule, comprenant
- un radiateur (1), présentant au moins un dissipateur thermique (1.1) avec au moins deux canaux d'agent de refroidissement (10A, 10B, 10C) s'étendant à distance l'un de l'autre et une pluralité d'ailettes (11) qui s'étendent entre les au moins deux canaux d'agent de refroidissement, une fente (111, 112) étant formée entre respectivement deux ailettes de la pluralité d'ailettes (11) pour un courant d'air de refroidissement, et
- un module de ventilateur de radiateur (2) comprenant au moins une roue de ventilateur (21) pour influencer le courant d'air de refroidissement en direction du dissipateur thermique (1.1),
dans lequel, sur le dissipateur thermique (1.1), la pluralité d'ailettes (11) qui s'étendent entre deux canaux d'agent de refroidissement (10A, 10B, 10C) sont divisées en au moins deux zones de refroidissement différentes (Z1, Z2A, Z2B), dans lequel le module de ventilateur de radiateur (2), le long d'une direction de vue depuis le module de ventilateur de radiateur (2) en direction du dissipateur thermique (1.1) recouvre au moins partiellement une première zone de refroidissement (Z1) des au moins deux zones de refroidissement différentes (Z1, Z2A, Z2B) et il n'y a pas de recouvrement par le module de ventilation de radiateur (2) dans au moins une deuxième zone de refroidissement (Z2A, Z2B), et
**caractérisé en ce que** dans la première zone de refroidissement (Z1), une largeur de fente (d1) d'une fente (111) présente entre deux ailettes (11) est plus grande que dans la deuxième zone de refroidissement (Z2A, Z2B) des au moins deux zones de refroidissement différentes (Z1, Z2A, Z2B).

2. Ensemble de radiateur selon la revendication 1, **caractérisé en ce que** dans la première zone de refroidissement recouverte au moins partiellement par le module de ventilateur de radiateur (2), des fentes (111) entre respectivement deux ailettes voisines (11) de la pluralité d'ailettes présentent des largeurs de fente différentes ou des largeurs de fente identiques (d1).

3. Ensemble de radiateur selon la revendication 2, **caractérisé en ce que** les largeurs de fente (d1) différentes ou identiques sont respectivement plus grandes que les largeurs de fente (d2) entre respectivement deux ailettes (11) voisines de la deuxième zone de refroidissement (Z2A, Z2B).

4. Ensemble de radiateur selon l'une quelconque des revendications 1 à 3, **caractérisé en ce que** des largeurs de fente (d1) entre deux ailettes (11) voisines dans la première zone de refroidissement (Z1) sont chacune supérieures d'un facteur d'au moins 1,2 à une largeur de fente (d2) maximale de deux ailettes (11) voisines dans la deuxième zone de refroidissement (Z2A, Z2B).

5. Ensemble de radiateur selon l'une quelconque des revendications précédentes, **caractérisé en ce que** les différentes largeurs de fente (d1, d2) entre respectivement deux ailettes (11) voisines des au moins deux zones de refroidissement (Z1, Z2A, Z2B) différentes sont adaptées les unes aux autres et prédéfinies de telle sorte que, pour au moins un point de fonctionnement défini, qui est **caractérisé par** un afflux particulier de l'ensemble de radiateur avec de l'air de refroidissement en direction du dissipateur thermique (1.1), une vitesse d'écoulement d'une quantité partielle d'air de refroidissement provenant de l'afflux, qui s'écoule en tant que partie du courant d'air de refroidissement sur et à travers la pluralité d'ailettes (11) dans la première zone de refroidissement (Z1), est essentiellement ou exactement identique à une vitesse d'écoulement d'une quantité partielle d'air de refroidissement provenant de l'afflux, qui s'écoule en tant qu'autre partie du courant d'air de refroidissement sur et à travers la pluralité d'ailettes (11) dans la deuxième zone de refroidissement (Z2A, Z2B).

6. Ensemble de radiateur selon l'une quelconque des revendications précédentes, **caractérisé en ce que** les ailettes (11) sont réalisées chacune de manière rectiligne.

7. Ensemble de radiateur selon l'une quelconque des revendications précédentes, **caractérisé en ce qu'**une ailette (11) relie respectivement deux canaux de réfrigérant (10A, 10B ; 10B, 10C).

8. Ensemble de radiateur selon l'une quelconque des revendications précédentes, **caractérisé en ce que** le module de ventilateur de radiateur (2) est agencé en amont du dissipateur thermique (1.1), par rapport à un courant d'air de refroidissement à influencer, de telle sorte que la première zone de refroidissement (Z1), recouverte au moins partiellement par le module de ventilateur de radiateur (2), couvre une zone centrale du dissipateur thermique (1.1).1) et le module de ventilateur de radiateur (2) présente au moins deux bords (24A, 24B) devant lesquels s'écoule un courant d'air de refroidissement en direction d'au moins deux deuxièmes zones de refroidissement (Z2A, Z2B) du dissipateur thermique (1.1).

9. Ensemble de radiateur selon l'une quelconque des revendications précédentes, **caractérisé en ce qu'**au moins un canal d'agent de refroidissement (10A, 10B, 10C) présente une surface de section transversale (100.1) en forme de fleur.

10. Ensemble de radiateur selon l'une quelconque des revendications précédentes, **caractérisé en ce qu'**au moins un canal d'agent de refroidissement (10A, 10B, 100) présente une surface de section transversale (100.2) se rétrécissant en forme de goutte vers une section de bande d'extrémité (102B).

11. Ensemble de radiateur selon l'une quelconque des revendications précédentes, **caractérisé en ce qu'**au moins un canal d'agent de refroidissement (10A, 10B, 10C) et/ou la pluralité d'ailettes (11) sont fabriqués de manière additive.

12. Véhicule comprenant un ensemble de radiateur selon l'une quelconque des revendications précédentes.
